# EUROPEAN PATENT APPLICATION

(11) **EP 4 707 977 A1**
(43) Date of publication of application: **11.03.2026**
(21) Application number: 24814419.8
(22) Date of filing: 28.05.2024
(51) Int. Cl.: G05B 23/02

(54) **DIAGNOSIS METHOD, DIAGNOSIS APPARATUS, AND INTELLIGENT DEVICE**

(30) Priority: 01.06.2023 CN 202310644499
(71) Applicant: Shenzhen Yinwang Intelligent Technologies Co., Ltd., Shenzhen, Guangdong 518110 (CN)
(72) Inventor: ZHONG, Steven Yin, Shenzhen, Guangdong 518129 (CN); FU, Tianfu, Shenzhen, Guangdong 518129 (CN); WEI, Zhuo, Shenzhen, Guangdong 518129 (CN); JIANG, Zhichao, Shenzhen, Guangdong 518129 (CN); XIE, Yujuan, Shenzhen, Guangdong 518129 (CN)
(74) Representative: MERH-IP Matias Erny Reichl Hoffmann Patentanwälte PartG mbB
(86) International application number: PCT/CN2024/095706
(87) International publication number: WO 2024/245222

(57) **Abstract**

A diagnostic method, a diagnostic apparatus, and an intelligent device are provided. The method includes: A diagnostic agent node receives, from a diagnostic node, a first diagnostic instruction for a to-be-diagnosed node; verifies, according to the first diagnostic instruction, whether the diagnostic node has access control permission for the to-be-diagnosed node; and when the verification succeeds, sends a second diagnostic instruction to the to-be-diagnosed node, where the second diagnostic instruction is obtained according to the first diagnostic instruction. The technical solutions of this application can be applied to intelligent devices such as electric vehicles and new energy vehicles, and can implement isolation between a diagnostic node and a to-be-diagnosed node in the intelligent device, thereby reducing a risk that the to-be-diagnosed node is attacked in a diagnostic process. In addition, the technical solutions of this application can further unify communication for remote diagnostic and near-end diagnostic, and consolidate external communication used by the intelligent device for diagnostic to the diagnostic agent node. This facilitates management and maintenance of a diagnostic system.

## Description

This application claims priority to Chinese Patent Application No. 202310644499.9, filed with the China National Intellectual Property Administration on June 1, 2023 and entitled "DIAGNOSTIC METHOD, DIAGNOSTIC APPARATUS, AND INTELLIGENT DEVICE", which is incorporated herein by reference in its entirety.

### TECHNICAL FIELD

This application relates to the security field, and more specifically, to a diagnostic method, a diagnostic apparatus, and an intelligent device.

### BACKGROUND

On-board diagnostics (on-board diagnostics, OBD) is an online diagnostic system used in a vehicle to monitor vehicle conditions and control emissions. The on-board diagnostics may include a tester and a diagnostic module in the vehicle. The diagnostic module receives, through a diagnostic interface, a diagnostic instruction sent by the tester. The diagnostic instruction is used to diagnose a target electronic control unit (electronic control unit, ECU). When receiving the diagnostic instruction, the on-board diagnostics directly sends the diagnostic instruction to the target ECU.

It can be learned that, in the current technical solution, the tester can directly diagnose different ECUs, and therefore, ECUs in the vehicle are prone to attacks, threatening vehicle security.

### SUMMARY

This application provides a diagnostic method, a diagnostic device, and an intelligent device. A diagnostic agent node is disposed, so that isolation between a diagnostic device, for example, a near-end diagnostic device, and a to-be-diagnosed node in the intelligent device can be implemented, thereby reducing a risk that the to-be-diagnosed node is attacked in a diagnostic process.

According to a first aspect, a diagnostic method is provided. The method may be performed by an intelligent device, or may be performed by a computing platform of the intelligent device, or may be performed by a chip or a circuit used in the intelligent device. This is not limited in this application.

The method includes: receiving, from a diagnostic node, a first diagnostic instruction for a first to-be-diagnosed node; and verifying, according to the first diagnostic instruction, whether the diagnostic node has access control permission for the first to-be-diagnosed node.

In some possible implementations, when the verification succeeds, a second diagnostic instruction is sent to the first to-be-diagnosed node. The second diagnostic instruction is associated with the first diagnostic instruction.

In some possible implementations, a verification result is sent to the diagnostic node after whether the diagnostic node has the access control permission for the first to-be-diagnosed node is verified.

It should be noted that the verification result includes a positive response or a negative response. The positive response indicates that the diagnostic node can access the first to-be-diagnosed node. The negative response indicates that the diagnostic node cannot access the first to-be-diagnosed node.

For example, that the diagnostic node can access the first to-be-diagnosed node includes: The diagnostic node may send a diagnostic service to the first to-be-diagnosed node through a diagnostic agent node.

For example, the diagnostic node may include a near-end diagnostic device and a remote diagnostic server. The near-end diagnostic device may include a device that can be connected to a diagnostic interface, for example, a tester or an electrical inspection device.

In an example, the first to-be-diagnosed node is disposed in the intelligent device. The first diagnostic instruction may include information indicating a diagnostic service that may threaten security of the intelligent device. For example, the diagnostic service that threatens the security of the intelligent device may include one or more of data writing, data reading, and software flashing, or may include another diagnostic service that threatens the security of the intelligent device.

In another example, the first diagnostic instruction may alternatively be information about an authentication request used for secure access.

For example, when the first diagnostic instruction includes information indicating a diagnostic service that may threaten security of a vehicle, that the second diagnostic instruction is associated with the first diagnostic instruction may be understood as that the second diagnostic instruction is obtained by performing communication protocol conversion on the first diagnostic instruction. Alternatively, the first diagnostic instruction is the information about the authentication request used for the secure access, and that the second diagnostic instruction is associated with the first diagnostic instruction may be understood as that, after security authentication performed according to the first diagnostic instruction succeeds, the second diagnostic instruction is obtained from the diagnostic node; or after the security authentication performed according to the first diagnostic instruction succeeds, the second diagnostic instruction is obtained by performing communication protocol conversion on the diagnostic instruction obtained from the diagnostic node.

For example, the method may be performed by a controller of the intelligent device (for example, a vehicle), for example, may be performed by a controller that is used as the diagnostic agent node.

In the foregoing technical solution, through the diagnostic agent node, not only isolation between a diagnostic device, for example, the near-end diagnostic device, and a to-be-diagnosed node in the intelligent device can be implemented, thereby reducing a risk that the to-be-diagnosed node is attacked in a diagnostic process, but also communication for remote diagnostic and near-end diagnostic can be unified, and external communication used by the intelligent device for diagnostic is consolidated to the diagnostic agent node. This facilitates management and maintenance of a diagnostic system, and helps further improve device security in the diagnostic process.

With reference to the first aspect, in some implementations of the first aspect, verifying, according to the first diagnostic instruction, whether the diagnostic node has the access control permission for the first to-be-diagnosed node includes: obtaining, according to the first diagnostic instruction, a first random number related to the first to-be-diagnosed node; obtaining a first encrypted value, where the first encrypted value is associated with the first random number and a first diagnostic key, and the first diagnostic key is associated with a first diagnostic node; sending the first encrypted value to the first to-be-diagnosed node; and receiving, from the first to-be-diagnosed node, response information related to the first encrypted value, where the response information is used to determine whether the verification succeeds.

For example, the first random number related to the first to-be-diagnosed node may include a first random number generated by the first to-be-diagnosed node. Obtaining the first random number related to the first to-be-diagnosed node may include: obtaining the first random number from the first to-be-diagnosed node, or obtaining the first random number from a cloud server.

For example, that the first diagnostic key is associated with the first to-be-diagnosed node may be understood as that the first diagnostic key is a key that is pre-stored in the intelligent device and that is used for authentication with the first to-be-diagnosed node, or the first diagnostic key is a key that is temporarily generated and that is used for the authentication with the first to-be-diagnosed node. That the first encrypted value is associated with the first random number and the first diagnostic key may include that the first encrypted value is obtained through calculation based on the first random number and the first diagnostic key.

It may be understood that the first diagnostic instruction may include an identifier related to the first to-be-diagnosed node. For example, obtaining, according to the first diagnostic instruction, the first random number related to the first to-be-diagnosed node may include: when the first diagnostic instruction is received, sending random number request information to the first to-be-diagnosed node, to request to obtain the first random number.

For example, the response information may include a positive response and a negative response. When the positive response is received, it is determined that the verification succeeds. When the negative response is received, it is determined that the verification fails. The first to-be-diagnosed node verifies the first encrypted value based on the first random number and an encrypted value calculated based on a diagnostic key related to an authorized diagnostic agent node. When the encrypted value calculated by the first to-be-diagnosed node is equal to the first encrypted value, the diagnostic agent node may receive the positive response sent by the first to-be-diagnosed node. When the encrypted value calculated by the first to-be-diagnosed node is not equal to the first encrypted value, the diagnostic agent node may receive the negative response sent by the first to-be-diagnosed node.

In the foregoing technical solution, the diagnostic agent node sends the encrypted value to the first to-be-diagnosed node, to obtain the response information that is fed back by the first to-be-diagnosed node and that is related to the encrypted value, so as to determine whether the verification succeeds. The diagnostic agent node performs the verification based on an authentication principle in a current diagnostic process. This helps reduce deployment difficulty of the diagnostic method in this application.

With reference to the first aspect, in some implementations of the first aspect, obtaining the first encrypted value includes: determining the first diagnostic key according to the first diagnostic instruction; and calculating the first encrypted value based on the first diagnostic key and the first random number.

In some possible implementations, determining the first diagnostic key according to the first diagnostic instruction includes: determining, according to the first diagnostic instruction, the first diagnostic key from diagnostic keys related to a plurality of to-be-diagnosed nodes. The plurality of to-be-diagnosed nodes include the first to-be-diagnosed node.

For example, the diagnostic keys related to the plurality of to-be-diagnosed nodes are stored in the diagnostic agent node.

In the foregoing technical solution, the diagnostic keys of the plurality of to-be-diagnosed nodes are stored in the diagnostic agent node instead of being stored in the diagnostic node. This helps reduce a key leakage risk, thereby improving the security of the intelligent device.

With reference to the first aspect, in some implementations of the first aspect, obtaining the first encrypted value includes: sending the first random number and identity information of the first to-be-diagnosed node to a key storage node, where the identity information is used by the key storage node to determine the first diagnostic key; and receiving the first encrypted value from the key storage node, where the first encrypted value is obtained through calculation based on the first diagnostic key and the first random number. The key storage node is configured to store a diagnostic key related to at least one to-be-diagnosed node in a first device. The at least one to-be-diagnosed node includes the first to-be-diagnosed node.

For example, the identity information of the first to-be-diagnosed node may be determined based on a data identifier (data identifier, DID) in the first diagnostic instruction.

In the foregoing technical solution, the key storage node performs an operation of calculating the encrypted value. This helps reduce complexity of the diagnostic agent node in a verification process. Diagnostic keys of a plurality of to-be-diagnosed nodes are stored in the key storage node other than the diagnostic agent node. This can further increase difficulty for an attacker to obtain the key, thereby reducing a key leakage risk and improving the security of the intelligent device.

With reference to the first aspect, in some implementations of the first aspect, the first diagnostic instruction includes a first diagnostic service. Verifying, according to the first diagnostic instruction, whether the diagnostic node has the access control permission for the first to-be-diagnosed node includes: when a security level corresponding to the first diagnostic service is greater than or equal to a preset level threshold, verifying whether the diagnostic node has the access control permission for the first to-be-diagnosed node.

For example, the to-be-diagnosed node is an ECU. A plurality of security levels may exist in the ECU. Each security level is associated with at least one function or diagnostic service. A function or a diagnostic service associated with a security level can be allowed for performing only when the security level is unlocked. The security level corresponding to the first diagnostic service may be understood as a security level associated with the first diagnostic service.

In some possible implementations, the verification process is performed when the security level associated with the first diagnostic service is greater than or equal to the preset level threshold. The verification process is not performed when the security level associated with the first diagnostic service is less than the preset level threshold. When receiving the first diagnostic instruction, the diagnostic agent node directly sends the second diagnostic instruction to the diagnostic node.

For example, the first to-be-diagnosed node stores three security levels: a security level 1 to a security level 3. A larger value indicates a higher security threat to the intelligent device when a function or a diagnostic service associated with a security level is performed. Therefore, a higher security protection means is required. In the foregoing example, the preset level threshold may be the security level 2, or may be another value.

In the foregoing technical solution, the verification process is performed only when the security level corresponding to the first diagnostic service meets a condition. This helps reduce signaling overheads required in the diagnostic process and improve a diagnostic speed.

With reference to the first aspect, in some implementations of the first aspect, verifying, according to the first diagnostic instruction, whether the diagnostic node has the access control permission for the first to-be-diagnosed node includes: obtaining a policy file; performing a policy check based on the policy file, where the policy check includes checking at least one of the following: a validity period of the policy file, whether a diagnostic service included in the first diagnostic instruction is authorized, and whether the first to-be-diagnosed node is authorized; and when the policy check succeeds, verifying whether the diagnostic node has the access control permission for the first to-be-diagnosed node.

In the foregoing technical solution, the access control permission is verified after the policy check succeeds. This helps further improve robustness of the diagnostic system thereby ensuring the security of the intelligent device.

With reference to the first aspect, in some implementations of the first aspect, the diagnostic node is a near-end diagnostic device. The first diagnostic instruction includes an authentication request. The method further includes: sending a second random number to the diagnostic node based on the authentication request; receiving a second encrypted value from the diagnostic node; and verifying the second encrypted value based on the second random number and a temporary key, where the temporary key is related to an authorized near-end diagnostic device.

In some possible implementations, the diagnostic node is a near-end diagnostic device. The method includes: receiving an authentication request, and sending a second random number to the diagnostic node based on the authentication request; receiving a second encrypted value from the diagnostic node; and verifying the second encrypted value based on the second random number and a temporary key, where the temporary key is related to an authorized near-end diagnostic device. The authentication request is generated according to the first diagnostic instruction. For example, after sending the first diagnostic instruction to the diagnostic agent node, the diagnostic node generates the authentication request, and sends the authentication request to the diagnostic agent node.

For example, the temporary key may be generated over a Diffie-Hellman (DH) key exchange protocol, or may be generated in another manner.

In the foregoing technical solution, the diagnostic node and the diagnostic agent node perform authentication based on the temporary key. The security of the intelligent device is not threatened when a key used for authentication with the diagnostic agent node is leaked at the diagnostic node.

According to a second aspect, a diagnostic method is provided. The method may be performed by an intelligent device, or may be performed by a computing platform of the intelligent device, or may be performed by a chip or a circuit used in the intelligent device. This is not limited in this application.

The method includes: receiving a first encrypted value from a diagnostic agent node, where the first encrypted value is associated with a first random number and a first diagnostic key, and both the first random number and the first diagnostic key are associated with a first to-be-diagnosed node; verifying authority of the first encrypted value based on the first random number and the first diagnostic key; and sending response information to the diagnostic agent node based on a verification result of the authority of the first encrypted value.

In some possible implementations, the response information is used by the diagnostic agent node to determine that a diagnostic node has access control permission for the first to-be-diagnosed node, and/or the response information indicates that the diagnostic node has the access control permission for the first to-be-diagnosed node.

For example, the method may be performed by a controller of the intelligent device, for example, may be performed by a to-be-diagnosed controller, namely, the foregoing to-be-diagnosed node. The intelligent device includes the diagnostic agent node and the to-be-diagnosed node.

In the foregoing technical solution, the to-be-diagnosed node receives the encrypted value from the diagnostic agent node and verifies the encrypted value instead of directly receiving a related encrypted value from the diagnostic node. This helps implement isolation between the diagnostic node and the to-be-diagnosed node in the intelligent device through the diagnostic agent node, thereby reducing a risk of introducing an attack to the to-be-diagnosed node in a diagnostic process.

In some possible implementations, the method includes: receiving the first encrypted value from the diagnostic agent node, where the first encrypted value is associated with the first random number and the first diagnostic key, and both the first random number and the first diagnostic key are associated with a to-be-diagnosed node to be accessed by the diagnostic node; verifying the authority of the first encrypted value based on a third random number and a second diagnostic key, where both the third random number and the second diagnostic key are associated with the first to-be-diagnosed node; and sending the response information to the diagnostic agent node based on the verification result of the authority of the first encrypted value, where the response information is used by the diagnostic agent node to determine that the diagnostic node has the access control permission for the first to-be-diagnosed node.

In some possible implementations, the response information indicates whether the diagnostic node has the access control permission for the first to-be-diagnosed node.

It may be understood that, when the to-be-diagnosed node to be accessed by the diagnostic node is the first to-be-diagnosed node, the first random number is the same as the third random number, and the first diagnostic key is the same as the second diagnostic key. In this case, the response information may indicate that the authority verification on the first encrypted value succeeds. If the first random number is different from the third random number, and the first diagnostic key is different from the second diagnostic key, the response information indicates that the authority verification on the first encrypted value fails.

With reference to the second aspect, in some implementations of the second aspect, the method further includes: sending the first random number to the diagnostic agent node.

With reference to the second aspect, in some implementations of the second aspect, the method further includes: receiving a second diagnostic instruction from the diagnostic agent node, where the second diagnostic instruction is associated with a first diagnostic instruction that is sent by the diagnostic node and that is for the first to-be-diagnosed node.

According to a third aspect, a diagnostic method is provided. The method may be performed by an intelligent device, or may be performed by a computing platform of the intelligent device, or may be performed by a chip or a circuit used in the intelligent device. This is not limited in this application.

The method includes: receiving a first random number and identity information of a first to-be-diagnosed node from a diagnostic agent node, where the first random number is associated with the first to-be-diagnosed node; determining, based on the identity information, a first diagnostic key related to the first to-be-diagnosed node; calculating a first encrypted value based on the first diagnostic key and the first random number, where the first encrypted value is used to verify whether a diagnostic node has access control permission for the first to-be-diagnosed node; and sending the first encrypted value to the diagnostic agent node.

For example, the method may be performed by a controller of the intelligent device, for example, may be performed by a controller that is used as a key storage node.

In the foregoing technical solution, the key storage node stores a key that is used by the diagnostic agent node to perform authentication with a to-be-diagnosed node. This helps reduce a risk that the diagnostic key related to the to-be-diagnosed node is leaked, thereby improving security of the intelligent device.

With reference to the third aspect, in some implementations of the third aspect, the method is performed by the key storage node. The key storage node stores a diagnostic key related to at least one to-be-diagnosed node. The at least one to-be-diagnosed node includes the first to-be-diagnosed node.

With reference to the third aspect, in some implementations of the third aspect, the key storage node is disposed in a first device. The first device further includes the first to-be-diagnosed node.

According to a fourth aspect, a diagnostic apparatus is provided. The apparatus includes: a transceiver unit, configured to receive, from a diagnostic node, a first diagnostic instruction for a first to-be-diagnosed node; and a processing unit, configured to verify, according to the first diagnostic instruction, whether the diagnostic node has access control permission for the first to-be-diagnosed node. The transceiver unit is further configured to: when the verification succeeds, send a second diagnostic instruction to the first to-be-diagnosed node, where the second diagnostic instruction is associated with the first diagnostic instruction; and/or send a verification result to the diagnostic node.

With reference to the fourth aspect, in some implementations of the fourth aspect, the processing unit is configured to: obtain, according to the first diagnostic instruction, a first random number related to the first to-be-diagnosed node; obtain a first encrypted value, where the first encrypted value is associated with the first random number and a first diagnostic key, and the first diagnostic key is associated with a first diagnostic node; control the transceiver unit to send the first encrypted value to the first to-be-diagnosed node; and control the transceiver unit to receive, from the first to-be-diagnosed node, response information related to the first encrypted value, where the response information is used to determine whether the verification succeeds.

With reference to the fourth aspect, in some implementations of the fourth aspect, the processing unit is configured to: determine the first diagnostic key according to the first diagnostic instruction; and calculate the first encrypted value based on the first diagnostic key and the first random number.

With reference to the fourth aspect, in some implementations of the fourth aspect, the processing unit is configured to: control the transceiver unit to send the first random number and identity information of the first to-be-diagnosed node to a key storage node, where the identity information is used by the key storage node to determine the first diagnostic key; and control the transceiver unit to receive the first encrypted value from the key storage node, where the first encrypted value is obtained through calculation based on the first diagnostic key and the first random number. The key storage node stores a diagnostic key related to at least one to-be-diagnosed node in a first device. The at least one to-be-diagnosed node includes the first to-be-diagnosed node.

With reference to the fourth aspect, in some implementations of the fourth aspect, the first diagnostic instruction includes a first diagnostic service. The processing unit is configured to: when a security level corresponding to the first diagnostic service is greater than or equal to a preset level threshold, verify whether the diagnostic node has the access control permission for the first to-be-diagnosed node.

With reference to the fourth aspect, in some implementations of the fourth aspect, the processing unit is configured to: obtain a policy file; perform a policy check based on the policy file, where the policy check includes checking at least one of the following: a validity period of the policy file, whether a diagnostic service included in the first diagnostic instruction is authorized, and whether the first to-be-diagnosed node is authorized; and when the policy check succeeds, verify whether the diagnostic node has the access control permission for the first to-be-diagnosed node.

With reference to the fourth aspect, in some implementations of the fourth aspect, the first diagnostic instruction includes an authentication request. The diagnostic node is a near-end diagnostic device. The transceiver unit is further configured to: send a second random number to the diagnostic node based on the authentication request; and receive a second encrypted value from the diagnostic node. The processing unit is further configured to verify the second encrypted value based on the second random number and a temporary key, where the temporary key is related to an authorized near-end diagnostic device.

According to a fifth aspect, a diagnostic apparatus is provided. The apparatus includes: a transceiver unit, configured to receive a first encrypted value from a diagnostic agent node, where the first encrypted value is associated with a first random number and a first diagnostic key, and both the first random number and the first diagnostic key are associated with a first to-be-diagnosed node; and a processing unit, configured to verify authority of the first encrypted value based on the first random number and the first diagnostic key. The processing unit is further configured to control, based on a verification result of the authority of the first encrypted value, the transceiver unit to send response information to the diagnostic agent node, where the response information is used by the diagnostic agent node to determine that a diagnostic node has access control permission for the first to-be-diagnosed node.

With reference to the fifth aspect, in some implementations of the fifth aspect, the transceiver unit is further configured to send the first random number to the diagnostic agent node.

With reference to the fifth aspect, in some implementations of the fifth aspect, the transceiver unit is further configured to receive a second diagnostic instruction from the diagnostic agent node, where the second diagnostic instruction is associated with a first diagnostic instruction that is sent by the diagnostic node and that is for the first to-be-diagnosed node.

According to a sixth aspect, a diagnostic apparatus is provided. The apparatus includes: a transceiver unit, configured to receive a first random number and identity information of a first to-be-diagnosed node from a diagnostic agent node, where the first random number is associated with the first to-be-diagnosed node; and a processing unit, configured to determine, based on the identity information, a first diagnostic key related to the first to-be-diagnosed node. The processing unit is further configured to calculate a first encrypted value based on the first diagnostic key and the first random number, where the first encrypted value is used to verify whether a diagnostic node has access control permission for the first to-be-diagnosed node. The transceiver unit is further configured to send the first encrypted value to the diagnostic agent node.

With reference to the sixth aspect, in some implementations of the sixth aspect, the apparatus stores a diagnostic key related to at least one to-be-diagnosed node. The at least one to-be-diagnosed node includes the first to-be-diagnosed node.

With reference to the sixth aspect, in some implementations of the sixth aspect, the apparatus is disposed in a first device. The first device further includes the first to-be-diagnosed node.

According to a seventh aspect, a diagnostic system is provided. The system includes the apparatus according to any possible implementation of the fourth aspect and the apparatus according to any possible implementation of the fifth aspect.

With reference to the seventh aspect, in some implementations of the seventh aspect, the system further includes the apparatus according to any possible implementation of the sixth aspect.

With reference to the seventh aspect, in some implementations of the seventh aspect, the system further includes a diagnostic node. The diagnostic node is configured to send a diagnostic instruction for a to-be-diagnosed node.

According to an eighth aspect, a diagnostic apparatus is provided. The apparatus includes: a memory, configured to store a computer program; and a processor, configured to execute the computer program stored in the memory, to enable the apparatus to perform the method according to any possible implementation of the first aspect to the third aspect.

According to a ninth aspect, an intelligent device is provided. The intelligent device includes the apparatus according to any possible implementation of the fourth aspect to the sixth aspect, or the intelligent device includes the system according to the first two possible implementations of the seventh aspect.

With reference to the ninth aspect, in some implementations of the ninth aspect, the intelligent device is a vehicle.

According to a tenth aspect, a computer program product is provided. The computer program product includes computer program code. When the computer program code is run on a computer, the computer is enabled to perform the method according to any possible implementation of the first aspect to the third aspect.

It should be noted that the computer program code may be completely or partially stored in a first storage medium. The first storage medium may be encapsulated with a processor, or encapsulated separately from the processor.

According to an eleventh aspect, a computer-readable medium is provided. The computer-readable medium stores instructions. When the instructions are executed by a processor, the processor is enabled to implement the method according to any possible implementation of the first aspect to the third aspect.

According to a twelfth aspect, a chip is provided. The chip includes a circuit. The circuit is configured to perform the method according to any possible implementation of the first aspect to the third aspect.

### BRIEF DESCRIPTION OF DRAWINGS

FIG. 1 is a diagram of a diagnostic system according to an embodiment of this application;
FIG. 2 is a block diagram of a diagnostic agent module according to an embodiment of this application;
FIG. 3 is a schematic flowchart of a diagnostic method according to an embodiment of this application;
FIG. 4 is another schematic flowchart of a diagnostic method according to an embodiment of this application;
FIG. 5 is another schematic flowchart of a diagnostic method according to an embodiment of this application;
FIG. 6 is a block diagram of a diagnostic apparatus according to an embodiment of this application; and
FIG. 7 is another block diagram of a diagnostic apparatus according to an embodiment of this application.

### DESCRIPTION OF EMBODIMENTS

With reference to accompanying drawings, the following describes technical solutions of this application.

On-board diagnostic is a check for determining a technical condition of a vehicle and finding a fault part and a cause without disassembling the vehicle. The on-board diagnostic generally includes content such as detection and diagnostic of vehicle power, detection and diagnostic of a vehicle chassis, detection and diagnostic of a vehicle body and accessory, detection of a vehicle exhaust pollutant and noise, and ECU firmware flash upgrade.

The on-board diagnostic includes remote diagnostic and near-end diagnostic. The remote diagnostic means that a diagnostic platform delivers, through a wireless communication network, a diagnostic instruction to an apparatus, for example, a telematics box (telematics box, T-Box) that is in the vehicle and that communicates with a device outside the vehicle, and then the T-Box forwards the diagnostic instruction to a target ECU for diagnostic. The near-end diagnostic means that a tester is connected to a diagnostic interface, and directly sends, through the diagnostic interface, a diagnostic instruction to a target ECU for diagnostic.

As described above, in the current near-end diagnostic, the tester directly diagnoses different ECUs, and therefore, ECUs in the vehicle are prone to attacks, exposing a large attack surface in a diagnostic process. In addition, when an operation requested by the diagnostic instruction may threaten vehicle security, the tester needs to perform challenge-response-based authentication based on a diagnostic key of the target ECU stored in the tester. The target ECU executes the related diagnostic instruction only after the authentication succeeds. In other words, the tester stores diagnostic keys of the ECUs, and these keys are likely to be leaked, seriously threatening the vehicle security.

In view of this, embodiments of this application provide a diagnostic method, a diagnostic apparatus, and an intelligent device. A diagnostic agent module in the intelligent device is used to verify whether a near-end tester or a remote diagnostic server has access control permission for a first to-be-diagnosed node in the intelligent device. After the verification succeeds, the first to-be-diagnosed node is diagnosed according to a diagnostic instruction sent by the near-end tester or the remote diagnostic server. The diagnostic agent module can be used to implement isolation between the near-end tester and the first to-be-diagnosed node in the intelligent device, thereby reducing a risk that the intelligent device is attacked in a diagnostic process. Further, the diagnostic agent module can further store a key required in the diagnostic process, to be specific, the tester no longer stores a key of the first to-be-diagnosed node. This helps reduce a key leakage risk.

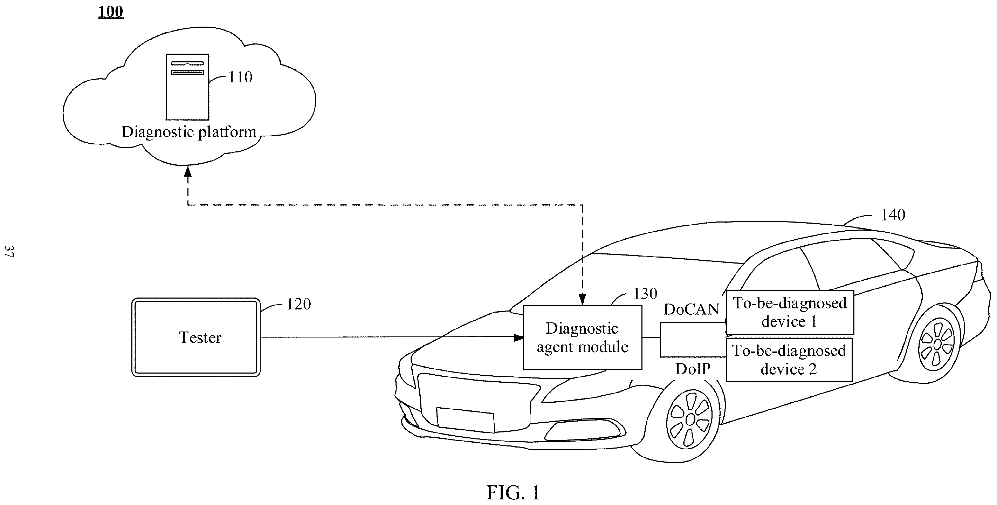

FIG. 1 shows a diagnostic system according to an embodiment of this application. As shown in FIG. 1, for example, an intelligent device is a vehicle. The system 100 includes a diagnostic platform 110, a tester 120, and a vehicle 140. The vehicle 140 includes a diagnostic agent module 130 and a plurality of to-be-diagnosed devices, for example, a to-be-diagnosed device 1 and a to-be-diagnosed device 2. Specifically, the diagnostic platform 110 may be a physical server or a virtual server. When the diagnostic platform 110 is a virtual server, the diagnostic platform 110 may be located anywhere in the world, and provide services for vehicles in different countries and regions. The diagnostic platform 111 may be connected to the diagnostic agent module 130 through a wireless communication network, and diagnose the to-be-diagnosed device in the vehicle 140 through the diagnostic agent module 130. The tester may be connected to the diagnostic agent module 130 through a diagnostic interface of the vehicle 140, and diagnose the to-be-diagnosed device in the vehicle 140 through the diagnostic agent module 130.

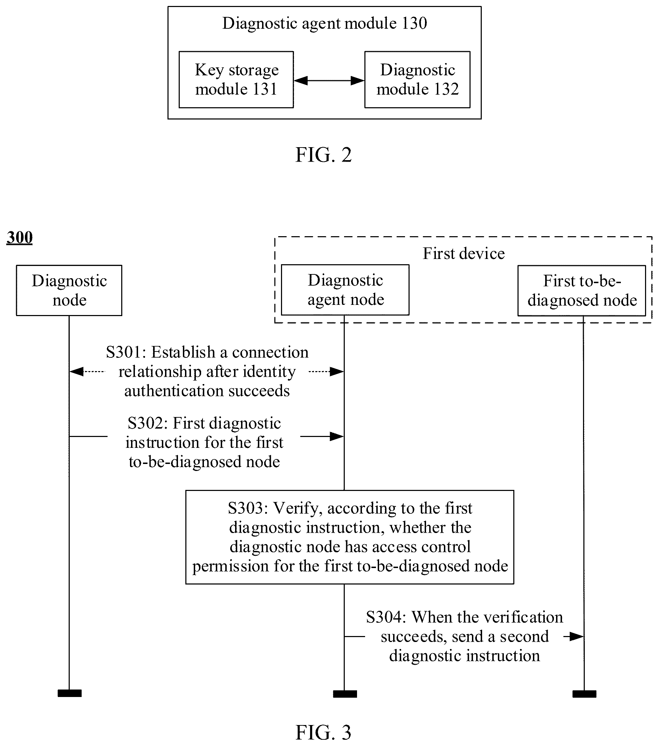

In some possible implementations, the diagnostic agent module 130 includes a key storage module 131 and a diagnostic module 132, as shown in FIG. 2. The key storage module 131 is configured to store a diagnostic key that is related to the to-be-diagnosed device and that is used to perform security authentication in a diagnostic process. In an example, when receiving a diagnostic instruction for a first to-be-diagnosed device in the plurality of to-be-diagnosed devices, the diagnostic module 131 obtains, from the key storage module 131 according to the diagnostic instruction, a diagnostic key related to the first to-be-diagnosed device, and calculates, based on the diagnostic key, an encrypted value related to the first to-be-diagnosed device. In another example, when receiving a diagnostic instruction for a first to-be-diagnosed device in the plurality of to-be-diagnosed devices, the diagnostic module 131 notifies, according to the diagnostic instruction, the key storage module 131 to determine a diagnostic key related to the first to-be-diagnosed device. The key storage module 131 calculates, based on the diagnostic key, an encrypted value related to the first to-be-diagnosed device. The encrypted value is used to verify whether a source device of the diagnostic instruction has access control permission for the first to-be-diagnosed device. After the verification succeeds, the diagnostic module 131 sends the diagnostic instruction to the first to-be-diagnosed device, so that the first to-be-diagnosed device executes the diagnostic instruction.

For example, in this embodiment of this application, the to-be-diagnosed device may include but is not limited to an ECU and a domain control unit (domain control unit, DCU).

In some possible implementations, the diagnostic agent module 130 may be disposed in one device. For example, the diagnostic agent module 130 may be disposed in any one of a vehicle domain controller (vehicle domain controller, VDC), an advanced driving domain controller (advanced driving domain controller, ADC), and a cockpit domain controller (cockpit domain controller, CDC). For another example, the diagnostic agent module 130 may alternatively be disposed in any one of an in-car application-server (in-car application-server, ICAS) controller, a body domain controller (body domain controller, BDC), a special equipment system (special equipment system, SAS), a media graphics unit (media graphics unit, MGU), a body super core (body super core, BSC), and an advanced driving assistant system super core (advanced driving assistant system super core, ADAS super core). This is not limited in this application. An ICAS may include at least one of the following: a vehicle control server ICAS 1, an intelligent driving server ICAS 2, an intelligent cockpit server ICAS 3, and an infotainment server ICAS 4.

In some possible implementations, the diagnostic agent module 130 may be disposed in different devices in the foregoing example. For example, the key storage module 131 and the diagnostic module 132 are respectively disposed in two devices. A device in which the key storage module 131 is located may have a stronger security capability.

With reference to FIG. 3, the following describes a specific procedure of the diagnostic method provided in embodiments of this application.

FIG. 3 is a schematic flowchart of a diagnostic method according to an embodiment of this application. The method 300 may be performed by the diagnostic system 100 shown in FIG. 1. The method 300 may include the following steps.

S301: Establish a connection relationship after authentication between a diagnostic node and a diagnostic agent node succeeds.

For example, the diagnostic node may include at least one of the diagnostic platform 110 and the tester 120. The diagnostic agent node may include the diagnostic agent module 130, or the diagnostic agent node may include the diagnostic module 132.

For example, when diagnostic needs to be performed, the diagnostic platform sends a connection request to the diagnostic agent node. Alternatively, when the tester is connected to a diagnostic interface, the tester sends a connection request to the diagnostic agent node.

Further, the diagnostic agent node triggers identity authentication on the diagnostic node based on the connection request. For example, the identity authentication may be authentication over a transport layer security (transport layer security, TLS) protocol, or the identity may be implemented according to another authentication method.

In a specific implementation process, S301 may be skipped, and S302 is directly performed.

S302: The diagnostic node sends a first diagnostic instruction for a first to-be-diagnosed node to the diagnostic agent node.

For example, the first to-be-diagnosed node may include one or more of the to-be-diagnosed devices in the foregoing embodiment, for example, may include the first to-be-diagnosed device.

It should be noted that a first device includes the diagnostic agent node and the first to-be-diagnosed node. For example, the first device may be the vehicle 140, or may be another internet of things device.

S303: The diagnostic agent node verifies, according to the first diagnostic instruction, whether the diagnostic node has access control permission for the first to-be-diagnosed node.

For example, the first diagnostic instruction may be information indicating a diagnostic service that may threaten security of the first device. For example, the first diagnostic instruction may be information indicating a diagnostic service for reading data in the first to-be-diagnosed node. Alternatively, the first diagnostic instruction may be information used for an authentication request. For example, the first diagnostic instruction may be a sub-function "27 01" for requesting a seed in a service 0x27 in a unified diagnostic services (unified diagnostic services, UDS) protocol (referred to as UDS 27 for short below).

In some possible implementations, when the first diagnostic instruction is the information used for the authentication request, that the diagnostic agent node verifies whether the diagnostic node has the access control permission for the first to-be-diagnosed node may include: verifying, based on a challenge-response mechanism, whether the diagnostic node has the access control permission for the first to-be-diagnosed node.

In some possible implementations, when the first diagnostic instruction is the information indicating the diagnostic service that may threaten the security of the first device, that the diagnostic agent node verifies whether the diagnostic node has the access control permission for the first to-be-diagnosed node includes the following two steps:
S1: The diagnostic agent node performs a policy check according to the first diagnostic instruction.
S2: When the policy check succeeds, the diagnostic agent node may verify, based on the challenge-response mechanism, whether the diagnostic node has the access control permission for the first to-be-diagnosed node. For example, the diagnostic agent node may perform the verification based on a principle of the UDS 27.

For example, the diagnostic agent node may generate a temporary key related to an authorized diagnostic node, and may verify authority of the diagnostic node based on the temporary key. Further, the diagnostic agent node may determine, according to the first diagnostic instruction, a diagnostic key related to the first to-be-diagnosed node, and generate an identity credential, for example, an encrypted value, based on the diagnostic key, so that the first to-be-diagnosed node verifies authority of the diagnostic agent node.

S304: When the verification succeeds, the diagnostic agent node sends a second diagnostic instruction to the first to-be-diagnosed node.

For example, the second diagnostic instruction and the first diagnostic instruction may be a same instruction, or may be different instructions.

In some possible implementations, the first diagnostic instruction is the information indicating the diagnostic service that may threaten the security of the first device. For example, the first diagnostic instruction is information indicating a diagnostic service for reading data from or writing data into the first to-be-diagnosed node. If a communication protocol used by the diagnostic agent node to receive a diagnostic instruction is different from a communication protocol used by the diagnostic agent node to send a diagnostic instruction to the first to-be-diagnosed node, the second diagnostic instruction is obtained by performing communication protocol conversion on the first diagnostic instruction. If a communication protocol used by the diagnostic agent node to receive a diagnostic instruction is the same as a communication protocol used by the diagnostic agent node to send a diagnostic instruction to the first to-be-diagnosed node, the second diagnostic instruction is the first diagnostic instruction.

In some possible implementations, the first diagnostic instruction is the information used for the authentication request, for example, 27 01 (requesting a seed). In this case, the second diagnostic instruction may be information that is sent by the diagnostic node to the diagnostic agent node after the verification succeeds in S303 and that indicates a diagnostic service that may threaten the security of the first device.

For example, the diagnostic agent node sends the second diagnostic instruction to the first to-be-diagnosed node when both the verification performed by the diagnostic agent node on the authority of the diagnostic node and the verification performed by the first to-be-diagnosed node on the authority of the diagnostic agent node succeed.

In some possible implementations, the diagnostic service that is indicated by the second diagnostic instruction and that may threaten the security of the first device may include but is not limited to data reading, data writing, and firmware flash upgrade.

Further, the first to-be-diagnosed node executes the second diagnostic instruction to implement a diagnostic service and obtain a diagnostic result.

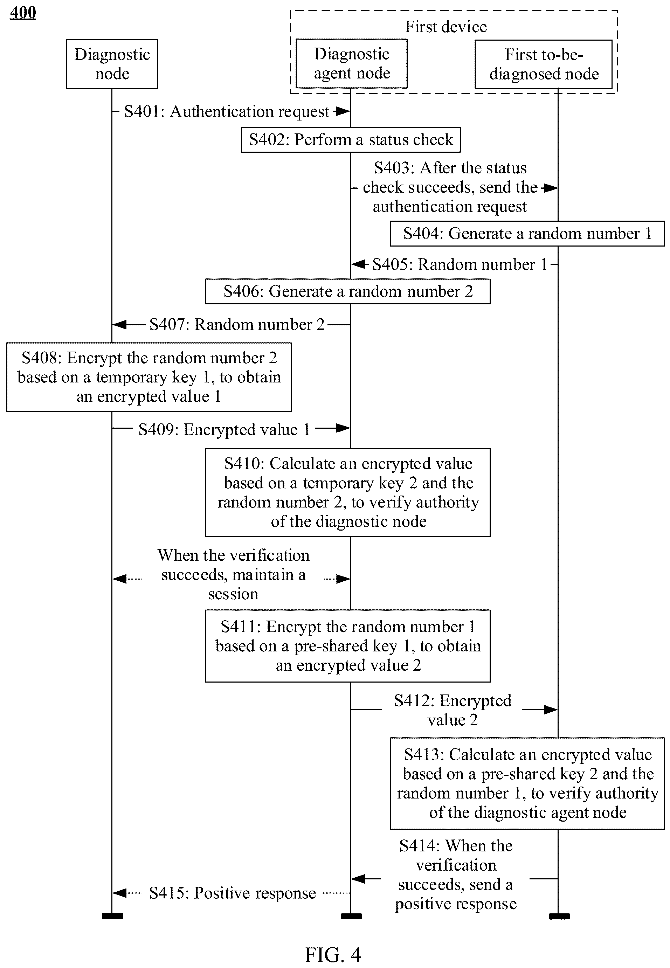

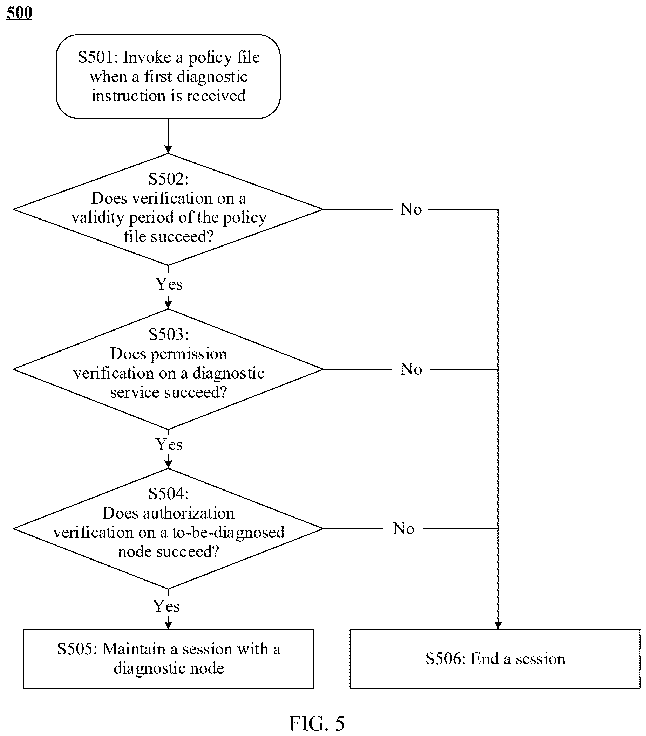

To make a reader understand the foregoing verification process, the following describes specific implementations of the verification with reference to FIG. 4 and FIG. 5 by using examples.

FIG. 4 is a schematic flowchart of a diagnostic method according to an embodiment of this application. The method 400 may be understood as an extension of S303 in the method 300, and is used to explain a detailed procedure in which the diagnostic agent node verifies the access control permission of the diagnostic node. The method 400 may include the following steps.

S401: The diagnostic node sends the authentication request to the diagnostic agent node.

For example, the authentication request may carry an identifier of the first to-be-diagnosed node. For example, the identifier may be a DID.

For example, the authentication request may be in a form of "requesting a seed (requestSeed)", or may be other information used to request a random number from the first to-be-diagnosed node.

In some possible implementations, when diagnostic services indicated by diagnostic instructions are different, security levels associated with the authentication request may be different. For example, a security level 1 corresponds to 27 01 (requesting a seed) and 27 02 (sending a key), and a security level 2 corresponds to 27 05 (requesting a seed) and 27 06 (sending a key).

S402: The diagnostic agent node performs a status check based on the authentication request.

For example, the status check performed by the diagnostic agent node includes checking whether a travel speed of the vehicle is less than or equal to a preset threshold. When it is determined that the travel speed of the vehicle is less than or equal to the preset threshold, it is determined that the status check succeeds. In this case, S403 is performed. The preset threshold may be 3 kilometers/hour, or may be another value.

It may be understood that, because the vehicle needs to invoke a specific resource when performing a diagnostic task, performing the diagnostic task when the vehicle travels at a high speed may affect another function of the vehicle. Therefore, the status check may further include another type of status check.

S403: After the status check succeeds, the diagnostic agent node sends the authentication request to the first to-be-diagnosed node.

For example, the authentication request includes the identifier of the first to-be-diagnosed node, and the diagnostic agent node determines the first to-be-diagnosed node based on the identifier in the authentication request.

S404: The first to-be-diagnosed node generates a random number 1.

For example, the random number 1 is denoted as seed_ecu.

S405: The first to-be-diagnosed node sends the random number 1 to the diagnostic agent node.

For example, the first to-be-diagnosed node sends the random number 1 to the diagnostic agent node through a diagnostic response.

S406: The diagnostic agent node generates a random number 2.

For example, the random number 2 is denoted as seed_agent.

S407: The diagnostic agent node sends the random number 2 to the diagnostic node.

S408: The diagnostic node encrypts the random number 2 based on a temporary key 1, to obtain an encrypted value 1.

For example, the encrypted value 1 may be calculated according to a CMAC algorithm. For example, the temporary key 1 is denoted as key_agent, and the encrypted value 1 may be CMAC (key_agent, seed_agent).

S409: The diagnostic node sends the encrypted value 1 to the diagnostic agent node.

For example, the diagnostic node sends the encrypted value 1 based on 27 02 (sending a key).

S410: The diagnostic agent node calculates an encrypted value based on a temporary key 2 and the random number 2, to verify the authority of the diagnostic node.

For example, the diagnostic agent node may generate a temporary key related to an authorized diagnostic node, for example, the temporary key 2. If the encrypted value calculated by the diagnostic agent node based on the temporary key 2 and the random number 2 is the same as the encrypted value 1, it is determined that the temporary key 1 and the temporary key 2 are a pair of symmetric keys or a same key, and then it is determined that the diagnostic node is authorized. The diagnostic agent node maintains a session with the diagnostic node, and continues to perform S411. If the encrypted value calculated by the diagnostic agent node based on the temporary key 2 and the random number 2 is different from the encrypted value 1, the diagnostic agent node terminates the session with the diagnostic node.

In some possible implementations, the diagnostic agent node and the authorized diagnostic node may calculate temporary keys over a Diffie-Hellman (DH) key exchange protocol. For example, the authorized diagnostic node generates a random value as a key, and generates a first temporary public key based on the key; and the diagnostic agent node generates a random value as a key, and generates a second temporary public key based on the key. The diagnostic agent node and the authorized diagnostic node exchange the temporary public keys of each other, and calculate a same temporary key based on the temporary public keys and the keys of the diagnostic agent node and the authorized diagnostic node.

S411: The diagnostic agent node encrypts the random number 1 based on a pre-shared key 1, to obtain an encrypted value 2.

For example, the diagnostic agent node stores the diagnostic key related to the first to-be-diagnosed node, for example, the pre-shared key 1.

In some possible implementations, when receiving the diagnostic instruction, the diagnostic agent node obtains the diagnostic key related to the first to-be-diagnosed node. Alternatively, when the authority verification on the diagnostic node succeeds, the diagnostic agent node obtains the diagnostic key related to the first to-be-diagnosed node. Obtaining the diagnostic key related to the first to-be-diagnosed node includes: The diagnostic module in the diagnostic agent node obtains, from a key storage module, the diagnostic key related to the first to-be-diagnosed node.

For example, the encrypted value 2 may be calculated according to the CMAC algorithm. For example, the pre-shared key 1 is denoted as key_ecu, and the encrypted value 2 may be CMAC (key_ecu, seed_ecu).

S412: The diagnostic agent node sends the encrypted value 2 to the first to-be-diagnosed node.

For example, the diagnostic agent node sends the encrypted value 2 based on 27 02 (sending a key).

S413: The first to-be-diagnosed node calculates an encrypted value based on a pre-shared key 2 and the random number 1, to verify the authority of the diagnostic agent node.

If the encrypted value calculated by the first to-be-diagnosed node based on the pre-shared key 2 and the random number 1 is the same as the encrypted value 2, it is determined that the pre-shared key 1 and the pre-shared key 2 are a pair of symmetric keys or a same key, and then it is determined that the diagnostic agent node is authorized, and S414 continues to be performed. If the encrypted value calculated by the first to-be-diagnosed node based on the pre-shared key 2 and the random number 1 is different from the encrypted value 2, the first to-be-diagnosed node sends a negative response to the diagnostic agent node.

S414: When the verification succeeds, the first to-be-diagnosed node sends a positive response to the diagnostic agent node.

For example, the first to-be-diagnosed node sends the positive response based on 67 02.

S415: The diagnostic agent node forwards the positive response to the diagnostic node.

For example, the diagnostic agent node sends the positive response based on 67 02.

It should be noted that an example in which the first device is a vehicle is used. In an example, when the diagnostic agent node is disposed in one device of the vehicle, for example, when the diagnostic agent node is disposed in a CDC or a VDC, actions performed by the diagnostic agent node is performed by the CDC or the VDC. In another example, the diagnostic module and the key storage module in the diagnostic agent node are respectively disposed in two devices of the vehicle. For example, the diagnostic module is disposed in a VDC, and the key storage module is disposed in a CDC. In this case, the foregoing operations related to encrypted-value calculation may be performed by the CDC. The CDC forwards a calculation result to the VDC. The VDC performs an encrypted-value comparison operation and communicates with the diagnostic node and the first to-be-diagnosed node.

It should be further noted that, in a specific implementation process, not all the operations in FIG. 4 need to be performed. For example, only S403 to S405 and S411 to S414 may be performed. In addition, alternatively, the operations shown in FIG. 4 may not be performed in the sequence shown in the figure. For example, S407 to S410 may be performed at the same time as S411 to S413.

FIG. 5 is another schematic flowchart of a diagnostic method according to an embodiment of this application. The method 500 may be understood as an extension of the method 300, and is used to explain a detailed procedure in which the diagnostic agent node performs the policy check. The method 500 may be performed by the diagnostic agent node. The method 500 includes the following steps.

S501: Invoke a policy file when the first diagnostic instruction is received.

For example, the diagnostic node automatically generates the policy file based on a target to-be-diagnosed node and a diagnostic service included in the first diagnostic instruction, and delivers the policy file to the vehicle. The diagnostic agent node may invoke the policy file from a node that is of the vehicle and that stores the policy file.

For example, the policy file may include at least the following content: a vehicle identifier, a validity period, a to-be-diagnosed node identifier, and a diagnostic service identifier.

S502: Determine whether verification on the validity period of the policy file succeeds.

Specifically, S503 is performed when the verification on the validity period of the policy file succeeds, or S506 is performed when the verification on the validity period of the policy file fails.

For example, when the policy file is valid, the policy file is used to detect the diagnostic instruction. If the policy file is invalid, the diagnostic procedure ends.

S503: Determine whether permission verification on the diagnostic service succeeds.

Specifically, S504 is performed when the verification on the diagnostic service succeeds, or S506 is performed when the verification on the diagnostic service fails.

For example, the diagnostic agent node verifies whether a diagnostic service identifier in the diagnostic instruction is consistent with the diagnostic service identifier in the policy file. If the diagnostic service identifier in the diagnostic instruction is consistent with the diagnostic service identifier in the policy file, it is determined that the verification succeeds. If the diagnostic service identifier in the diagnostic instruction is inconsistent with the diagnostic service identifier in the policy file, the verification fails.

S504: Determine whether authorization verification on a to-be-diagnosed node succeeds.

Specifically, S505 is performed when the authorization verification on the to-be-diagnosed node succeeds, or S506 is performed when the authorization verification on the to-be-diagnosed node fails.

For example, the diagnostic agent node verifies whether a vehicle identifier and a to-be-diagnosed node identifier in the diagnostic instruction are consistent with the vehicle identifier and the to-be-diagnosed node identifier in the policy file. If the vehicle identifier and the to-be-diagnosed node identifier in the diagnostic instruction are consistent with the vehicle identifier and the to-be-diagnosed node identifier in the policy file, it is determined that the verification succeeds. If the vehicle identifier and the to-be-diagnosed node identifier in the diagnostic instruction are inconsistent with the vehicle identifier and the to-be-diagnosed node identifier in the policy file, the verification fails.

S505: Maintain a session with the diagnostic node.

S506: End a session.

It should be noted that, in a specific implementation process, not all the operations in FIG. 5 need to be performed. For example, only one or more of S502 to S504 may be performed. In addition, alternatively, the operations shown in FIG. 5 may not be performed in the sequence shown in the figure. For example, S504 may be performed before S502 and S503.

When the technical solutions of this application are applied to a vehicle, two or more diagnostic agent nodes may be disposed in the vehicle. In consideration of a specific implementation process, an electrical/electronic architecture (electrical/electronic architecture, EEA) of the vehicle may have two forms: a domain-centralized architecture and a centralized architecture. In the domain-centralized architecture, intelligent driving functions of the vehicle are divided into domains, and intelligent driving functions in a single domain are controlled through a domain controller in a centralized manner. The domain controller may include a vehicle domain controller, an automatic driving domain controller, and a cockpit domain controller. Further, the domain controller controls an ECU in the single domain to implement a corresponding function. In the centralized architecture, computing functions are centralized as much as possible, and a zonal ECU (zonal ECU) is controlled through a central computing platform, to implement a corresponding intelligent driving function. For example, two or more diagnostic agent nodes in the vehicle are respectively two or more domain controllers, or the two or more diagnostic agent nodes are respectively two or more zonal ECUs. It is assumed that a total of two diagnostic agent nodes, namely, a node 1 and a node 2, are disposed in the vehicle, where a to-be-diagnosed node 1 is an ECU in a single domain that the node 2 is responsible for. In this case, when the node 1 receives a diagnostic instruction for the to-be-diagnosed node 1, after performing authentication with the diagnostic node, the node 1 forwards the diagnostic instruction for the to-be-diagnosed node 1 to the node 2, and the node 2 performs a verification process with the to-be-diagnosed node 1, namely, S303 and S304, S403 to S405, and S411 to S414 in the foregoing embodiments.

In embodiments of this application, unless otherwise specified or there is a logic conflict, terms and/or descriptions between embodiments are consistent and may be mutually referenced, and technical features in different embodiments may be combined based on an internal logical relationship thereof, to form a new embodiment.

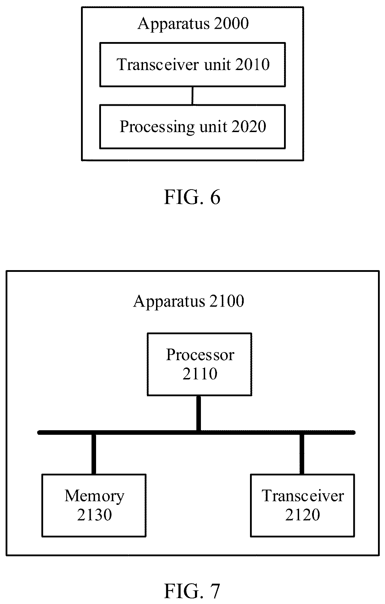

With reference to FIG. 1 to FIG. 5, the foregoing describes in detail the methods provided in embodiments of this application. With reference to FIG. 6 and FIG. 7, the following describes in detail apparatuses provided in embodiments of this application. It should be understood that descriptions of the apparatus embodiments correspond to the descriptions of the method embodiments. Therefore, for content that is not described in detail, refer to the foregoing method embodiments. For brevity, details are not described herein again.

FIG. 6 is a block diagram of a diagnostic apparatus 2000 according to an embodiment of this application. The apparatus 2000 includes a transceiver unit 2010 and a processing unit 2020.

The apparatus 2000 may include a unit configured to perform the methods in FIG. 3 to FIG. 5. In addition, the units in the apparatus 2000 are separately used to implement corresponding procedures in the method embodiments in FIG. 3 to FIG. 5. For content that is not described in detail on the apparatus side, refer to the descriptions in the foregoing method embodiments.

For example, the apparatus 2000 may be disposed in the diagnostic agent module 130. For example, the apparatus 2000 may be the diagnostic module 132 in the diagnostic agent module 130, or the apparatus 2000 may be the key storage module 131 in the diagnostic agent module 130.

For example, when the apparatus 2000 is disposed in the diagnostic agent module 130, and is configured to perform the method 300, the transceiver unit 2010 is configured to receive, from a diagnostic node, a first diagnostic instruction for a first to-be-diagnosed node. The processing unit 2020 is configured to verify, according to the first diagnostic instruction, whether the diagnostic node has access control permission for the first to-be-diagnosed node. The transceiver unit 2010 is further configured to: when the verification succeeds, send a second diagnostic instruction to the first to-be-diagnosed node, where the second diagnostic instruction is associated with the first diagnostic instruction.

In some possible implementations, the processing unit 2020 is configured to: obtain, according to the first diagnostic instruction, a first random number related to the first to-be-diagnosed node; obtain a first encrypted value, where the first encrypted value is associated with the first random number and a first diagnostic key, and the first diagnostic key is associated with a first diagnostic node; control the transceiver unit 2010 to send the first encrypted value to the first to-be-diagnosed node; and control the transceiver unit 2010 to receive, from the first to-be-diagnosed node, response information related to the first encrypted value, where the response information is used to determine whether the verification succeeds.

For example, the first random number may include the random number 1, and the first encrypted value may include the encrypted value 2.

In some possible implementations, the processing unit 2020 is configured to: determine the first diagnostic key according to the first diagnostic instruction; and calculate the first encrypted value based on the first diagnostic key and the first random number.

In some possible implementations, the first to-be-diagnosed node is disposed in a first device. The processing unit 2020 is configured to: control the transceiver unit 2010 to send the first random number and identity information of the first to-be-diagnosed node to a key storage node, where the identity information is used by the key storage node to determine the first diagnostic key; and control the transceiver unit 2010 to receive the first encrypted value from the key storage node, where the first encrypted value is obtained through calculation based on the first diagnostic key and the first random number. The key storage node is configured to store a diagnostic key related to at least one to-be-diagnosed node in the first device. The at least one to-be-diagnosed node includes the first to-be-diagnosed node.

In some possible implementations, the first diagnostic instruction includes a first diagnostic service. The processing unit 2020 is configured to: when a security level corresponding to the first diagnostic service is greater than or equal to a preset level threshold, verify whether the diagnostic node has the access control permission for the first to-be-diagnosed node.

In some possible implementations, the processing unit 2020 is configured to: obtain a policy file; perform a policy check based on the policy file, where the policy check includes checking at least one of the following: a validity period of the policy file, whether a diagnostic service included in the first diagnostic instruction is authorized, and whether the first to-be-diagnosed node is authorized; and when the policy check succeeds, verify whether the diagnostic node has the access control permission for the first to-be-diagnosed node.

For example, the policy file may include the policy file in the method 500. For a detailed procedure of obtaining the policy file and performing the policy check, refer to the descriptions in the method 500. Details are not described herein again.

In some possible implementations, the first diagnostic instruction includes an authentication request. The diagnostic node is a near-end diagnostic device. The transceiver unit 2010 is further configured to: send a second random number to the diagnostic node based on the authentication request, and receive a second encrypted value from the diagnostic node. The processing unit 2020 is further configured to verify the second encrypted value based on the second random number and a temporary key, where the temporary key is related to an authorized near-end diagnostic device.

For example, the second random number may include the random number 2, and the second encrypted value may include the encrypted value 1.

For example, the authentication request may include 27 01 (requesting a seed) in the foregoing embodiment, and the temporary key may include the temporary key 1. For a manner of generating the temporary key, refer to the descriptions in S410. Details are not described herein again.

For example, the apparatus 2000 may alternatively be disposed in a to-be-diagnosed node. When the apparatus 2000 is disposed in a first to-be-diagnosed node, and is configured to perform the method 300, the transceiver unit 2010 is configured to receive a first encrypted value from a diagnostic agent node, where the first encrypted value is associated with a first random number and a first diagnostic key, and both the first random number and the first diagnostic key are associated with the first to-be-diagnosed node. The processing unit 2020 is configured to verify authority of the first encrypted value based on the first random number and the first diagnostic key. The processing unit 2020 is further configured to control, based on a verification result of the authority of the first encrypted value, the transceiver unit to send response information to the diagnostic agent node, where the response information is used by the diagnostic agent node to determine that a diagnostic node has access control permission for the first to-be-diagnosed node.

In some possible implementations, the transceiver unit 2010 is further configured to send the first random number to the diagnostic agent node.

In some possible implementations, the transceiver unit 2010 is further configured to receive a second diagnostic instruction from the diagnostic agent node, where the second diagnostic instruction is associated with a first diagnostic instruction that is sent by the diagnostic node and that is for the first to-be-diagnosed node.

For example, the apparatus 2000 may alternatively be disposed in the key storage module 131. When the apparatus 2000 is disposed in the key storage module 131, and is configured to perform the method 300, the transceiver unit 2010 is configured to receive a first random number and identity information of a first to-be-diagnosed node from a diagnostic agent node, where the first random number is associated with the first to-be-diagnosed node. The processing unit 2020 is configured to determine, based on the identity information, a first diagnostic key related to the first to-be-diagnosed node. The processing unit 2020 is further configured to calculate a first encrypted value based on the first diagnostic key and the first random number, where the first encrypted value is used to verify whether a diagnostic node has access control permission for the first to-be-diagnosed node. The transceiver unit 2010 is further configured to send the first encrypted value to the diagnostic agent node.

In some possible implementations, the apparatus 2000 stores a diagnostic key related to at least one to-be-diagnosed node. The at least one to-be-diagnosed node includes the first to-be-diagnosed node.

In some possible implementations, the apparatus 2000 is disposed in the first device. The first device further includes the first to-be-diagnosed node.

For example, the operations performed by the transceiver unit 2010 and the processing unit 2020 may be performed by one processor, or may be performed by different processors. In a specific implementation process, the one or more processors may be a processor disposed in the vehicle 140 shown in FIG. 1, or the apparatus 2000 may be a chip disposed in the vehicle 140.

In this embodiment of this application, the processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement configuration of the hardware circuit may be understood as a process in which the processor loads instructions to implement functions of a part or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit DPU).

In a specific implementation process, all or a part of the units in the foregoing apparatus may be integrated, or may be implemented independently. In an implementation, these units are integrated and implemented in a form of a system on a chip (system on a chip, SoC).

FIG. 7 is a block diagram of a diagnostic apparatus according to an embodiment of this application. The apparatus 2100 shown in FIG. 7 may include a processor 2110, a transceiver 2120, and a memory 2130. The processor 2110, the transceiver 2120, and the memory 2130 are connected to each other through an internal connection path. The memory 2130 is configured to store instructions. The processor 2110 is configured to execute the instructions stored in the memory 2130, to implement the methods in the foregoing embodiments. Optionally, the memory 2130 may be coupled to the processor 2110 through an interface, or may be integrated with the processor 2110.

It should be noted that the transceiver 2120 may include but is not limited to a transceiver apparatus like an input/output interface (input/output interface), to implement communication between the apparatus 2100 and another device or a communication network.

The memory 2130 may be a read-only memory (read-only memory, ROM), a static storage device, a dynamic storage device, or a random access memory (random access memory, RAM).

The transceiver 2120 uses a transceiver apparatus, for example, but not limited to, a transceiver, to implement communication between the apparatus 2100 and another device or a communication network, so as to receive/send data/information used to implement the method in the foregoing embodiments.

In a specific implementation process, the apparatus 2100 may be disposed in the vehicle 140 shown in FIG. 1.

An embodiment of this application further provides a diagnostic system. The diagnostic system includes the diagnostic agent node and the first to-be-diagnosed node in the foregoing embodiments, or the diagnostic system may further include a key storage module (or a key storage node).

In some possible implementations, the diagnostic system further includes a diagnostic node. The diagnostic node is configured to send a diagnostic instruction for a first to-be-diagnosed node.

An embodiment of this application further provides an intelligent device. The intelligent device includes the apparatus 2000 or the apparatus 2100, or the intelligent device includes the foregoing diagnostic system.

In some possible implementations, the intelligent device may be the vehicle 140.

The intelligent device in this application may include a road transport means, a water transport means, an air transport means, an industrial device, an agricultural device, an entertainment device, or the like. For example, the intelligent device may be a vehicle. The vehicle is a vehicle in a broad sense, and may be a transport means (for example, a commercial vehicle, a passenger vehicle, a motorcycle, an airborne vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), an entertainment device, or a toy vehicle. A type of the vehicle is not specifically limited in embodiments of this application.

An embodiment of this application further provides a computer program product. The computer program product includes computer program code. When the computer program code is run on a computer, the computer is enabled to implement the methods in the foregoing embodiments of this application.

An embodiment of this application further provides a computer-readable storage medium. The computer-readable medium stores computer instructions. When the computer instructions are run on a computer, the computer is enabled to implement the methods in the foregoing embodiments of this application.

An embodiment of this application further provides a chip, including a circuit, configured to perform the methods in the foregoing embodiments of this application.

In an implementation process, the steps of the foregoing methods may be completed by using a hardware integrated logic circuit in a processor or instructions in a form of software. The methods disclosed with reference to embodiments of this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in a memory. The processor reads information in the memory, and completes the steps of the foregoing methods in combination with the hardware in the processor. To avoid repetition, details are not described herein again.

It may be clearly understood by a person skilled in the art that, for convenience and brevity of description, for a detailed working process of the foregoing system, apparatus, or unit, refer to a corresponding process in the foregoing method embodiments. Details are not described herein again.

In descriptions of embodiments of this application, "/" means "or" unless otherwise specified. For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following items (pieces)" or a similar expression thereof means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

In embodiments of this application, prefix words such as "first" and "second" are used only to distinguish between different described objects, and do not limit locations, a sequence, priorities, quantities, content, or the like of the described objects. In embodiments of this application, use of the prefix words used to distinguish between the described objects, for example, ordinal numbers, constitutes no limitation on the described objects. For descriptions of the described object, refer to context descriptions in claims or embodiments. Use of the prefix words should constitute no redundant limitation.

In the several embodiments provided in this application, it should be understood that the disclosed system, apparatuses, and methods may be implemented in other manners. For example, the described apparatus embodiments are merely examples. For example, division into the units is merely logical function division, and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

In embodiments of this application, unless otherwise specified or there is a logic conflict, terms and/or descriptions between embodiments are consistent and may be mutually referenced, and technical features in different embodiments may be combined based on an internal logical relationship thereof, to form a new embodiment.

The units described as separate parts may or may not be physically separate, and parts displayed as units may or may not be physical units, to be specific, may be located at one location, or may be distributed on a plurality of network units. A part or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A diagnostic method, comprising:
receiving, from a diagnostic node, a first diagnostic instruction for a first to-be-diagnosed node;
verifying, according to the first diagnostic instruction, whether the diagnostic node has access control permission for the first to-be-diagnosed node; and
when the verification succeeds, sending a second diagnostic instruction to the first to-be-diagnosed node, wherein the second diagnostic instruction is associated with the first diagnostic instruction.

2. The method according to claim 1, wherein verifying, according to the first diagnostic instruction, whether the diagnostic node has the access control permission for the first to-be-diagnosed node comprises:
obtaining, according to the first diagnostic instruction, a first random number related to the first to-be-diagnosed node;
obtaining a first encrypted value, wherein the first encrypted value is associated with the first random number and a first diagnostic key, and the first diagnostic key is associated with the first to-be-diagnosed node;
sending the first encrypted value to the first to-be-diagnosed node; and
receiving, from the first to-be-diagnosed node, response information related to the first encrypted value, wherein the response information is used to determine whether the verification succeeds.

3. The method according to claim 2, wherein obtaining the first encrypted value comprises:
determining the first diagnostic key according to the first diagnostic instruction; and
calculating the first encrypted value based on the first diagnostic key and the first random number.

4. The method according to claim 2, wherein obtaining the first encrypted value comprises:
sending the first random number and identity information of the first to-be-diagnosed node to a key storage node, wherein the identity information is used to determine the first diagnostic key; and
receiving the first encrypted value from the key storage node, wherein the first encrypted value is obtained through calculation based on the first diagnostic key and the first random number, wherein
the key storage node stores a diagnostic key related to at least one to-be-diagnosed node, and the at least one to-be-diagnosed node comprises the first to-be-diagnosed node.

5. The method according to any one of claims 1 to 4, wherein the first diagnostic instruction comprises a first diagnostic service, and verifying, according to the first diagnostic instruction, whether the diagnostic node has the access control permission for the first to-be-diagnosed node comprises:
when a security level corresponding to the first diagnostic service is greater than or equal to a preset level threshold, verifying whether the diagnostic node has the access control permission for the first to-be-diagnosed node.

6. The method according to any one of claims 1 to 5, wherein verifying, according to the first diagnostic instruction, whether the diagnostic node has the access control permission for the first to-be-diagnosed node comprises:
obtaining a policy file;
performing a policy check based on the policy file, wherein the policy check comprises checking at least one of the following: a validity period of the policy file, whether a diagnostic service comprised in the first diagnostic instruction is authorized, and whether the first to-be-diagnosed node is authorized; and
when the policy check succeeds, verifying whether the diagnostic node has the access control permission for the first to-be-diagnosed node.

7. The method according to any one of claims 1 to 6, wherein the first diagnostic instruction comprises an authentication request, the diagnostic node is a near-end diagnostic device, and the method further comprises:
sending a second random number to the diagnostic node based on the authentication request;
receiving a second encrypted value from the diagnostic node; and
verifying the second encrypted value based on the second random number and a temporary key, wherein the temporary key is related to an authorized near-end diagnostic device.

8. A diagnostic method, comprising:
receiving a first encrypted value from a diagnostic agent node, wherein the first encrypted value is associated with a first random number and a first diagnostic key, and both the first random number and the first diagnostic key are associated with the first to-be-diagnosed node;
verifying authority of the first encrypted value based on the first random number and the first diagnostic key; and
sending response information to the diagnostic agent node based on a verification result of the authority of the first encrypted value, wherein the response information is used by the diagnostic agent node to determine that a diagnostic node has access control permission for the first to-be-diagnosed node.

9. The method according to claim 8, wherein the method further comprises:
sending the first random number to the diagnostic agent node.

10. The method according to claim 8 or 9, wherein the method further comprises:
receiving a second diagnostic instruction from the diagnostic agent node, wherein the second diagnostic instruction is associated with a first diagnostic instruction that is sent by the diagnostic node and that is for the first to-be-diagnosed node.

11. A diagnostic method, comprising:
receiving a first random number and identity information of a first to-be-diagnosed node from a diagnostic agent node, wherein the first random number is associated with the first to-be-diagnosed node;
determining, based on the identity information, a first diagnostic key related to the first to-be-diagnosed node;
calculating a first encrypted value based on the first diagnostic key and the first random number, wherein the first encrypted value is used to verify whether a diagnostic node has access control permission for the first to-be-diagnosed node; and
sending the first encrypted value to the diagnostic agent node.

12. The method according to claim 11, wherein the method is performed by a key storage node, the key storage node stores a diagnostic key related to at least one to-be-diagnosed node, and the at least one to-be-diagnosed node comprises the first to-be-diagnosed node.

13. The method according to claim 12, wherein the key storage node is disposed in a first device, and the first device further comprises the first to-be-diagnosed node.

14. A diagnostic apparatus, comprising:
a transceiver unit, configured to receive, from a diagnostic node, a first diagnostic instruction for a first to-be-diagnosed node; and
a processing unit, configured to verify, according to the first diagnostic instruction, whether the diagnostic node has access control permission for the first to-be-diagnosed node, wherein
the transceiver unit is further configured to: when the verification succeeds, send a second diagnostic instruction to the first to-be-diagnosed node, wherein the second diagnostic instruction is associated with the first diagnostic instruction.

15. The apparatus according to claim 14, wherein the processing unit is configured to:
obtain, according to the first diagnostic instruction, a first random number related to the first to-be-diagnosed node;
obtain a first encrypted value, wherein the first encrypted value is associated with the first random number and a first diagnostic key, and the first diagnostic key is associated with the first to-be-diagnosed node;
control the transceiver unit to send the first encrypted value to the first to-be-diagnosed node; and
control the transceiver unit to receive, from the first to-be-diagnosed node, response information related to the first encrypted value, wherein the response information is used to determine whether the verification succeeds.

16. The apparatus according to claim 15, wherein the processing unit is configured to:
determine the first diagnostic key according to the first diagnostic instruction; and
calculate the first encrypted value based on the first diagnostic key and the first random number.

17. The apparatus according to claim 15, wherein the processing unit is configured to:
control the transceiver unit to send the first random number and identity information of the first to-be-diagnosed node to a key storage node, wherein the identity information is used by the key storage node to determine the first diagnostic key; and
control the transceiver unit to receive the first encrypted value from the key storage node, wherein the first encrypted value is obtained through calculation based on the first diagnostic key and the first random number, wherein
the key storage node stores a diagnostic key related to at least one to-be-diagnosed node, and the at least one to-be-diagnosed node comprises the first to-be-diagnosed node.

18. The apparatus according to any one of claims 14 to 17, wherein the first diagnostic instruction comprises a first diagnostic service, and the processing unit is configured to:
when a security level corresponding to the first diagnostic service is greater than or equal to a preset level threshold, verify whether the diagnostic node has the access control permission for the first to-be-diagnosed node.

19. The apparatus according to any one of claims 14 to 18, wherein the processing unit is configured to:
obtain a policy file;
perform a policy check based on the policy file, wherein the policy check comprises checking at least one of the following: a validity period of the policy file, whether a diagnostic service comprised in the first diagnostic instruction is authorized, and whether the first to-be-diagnosed node is authorized; and
when the policy check succeeds, verify whether the diagnostic node has the access control permission for the first to-be-diagnosed node.

20. The apparatus according to any one of claims 14 to 19, wherein the first diagnostic instruction comprises an authentication request, the diagnostic node is a near-end diagnostic device, and the transceiver unit is further configured to:
send a second random number to the diagnostic node based on the authentication request; and
receive a second encrypted value from the diagnostic node; and
the processing unit is further configured to verify the second encrypted value based on the second random number and a temporary key, wherein the temporary key is related to an authorized near-end diagnostic device.

21. A diagnostic apparatus, comprising:
a transceiver unit, configured to receive a first encrypted value from a diagnostic agent node, wherein the first encrypted value is associated with a first random number and a first diagnostic key, and both the first random number and the first to-be-diagnosed node are associated with the first to-be-diagnosed node; and
a processing unit, configured to verify authority of the first encrypted value based on the first random number and the first diagnostic key, wherein
the processing unit is further configured to control, based on a verification result of the authority of the first encrypted value, the transceiver unit to send response information to the diagnostic agent node, wherein the response information is used by the diagnostic agent node to determine that a diagnostic node has access control permission for the first to-be-diagnosed node.

22. The apparatus according to claim 21, wherein the transceiver unit is further configured to:
send the first random number to the diagnostic agent node.

23. The apparatus according to claim 21 or 22, wherein the transceiver unit is further configured to:
receive a second diagnostic instruction from the diagnostic agent node, wherein the second diagnostic instruction is associated with a first diagnostic instruction that is sent by the diagnostic node and that is for the first to-be-diagnosed node.

24. A diagnostic apparatus, comprising:
a transceiver unit, configured to receive a first random number and identity information of a first to-be-diagnosed node from a diagnostic agent node, wherein the first random number is associated with the first to-be-diagnosed node; and
a processing unit, configured to determine, based on the identity information, a first diagnostic key related to the first to-be-diagnosed node, wherein
the processing unit is further configured to calculate a first encrypted value based on the first diagnostic key and the first random number, wherein the first encrypted value is used to verify whether a diagnostic node has access control permission for the first to-be-diagnosed node; and
the transceiver unit is further configured to send the first encrypted value to the diagnostic agent node.

25. The apparatus according to claim 24, wherein the apparatus stores a diagnostic key related to at least one to-be-diagnosed node, and the at least one to-be-diagnosed node comprises the first to-be-diagnosed node.

26. The apparatus according to claim 24 or 25, wherein the apparatus is disposed in a first device, and the first device further comprises the first to-be-diagnosed node.

27. A diagnostic system, comprising the apparatus according to any one of claims 14 to 20 and the apparatus according to any one of claims 21 to 23.

28. The system according to claim 27, wherein the system further comprises the apparatus according to any one of claims 24 to 26.

29. The system according to claim 27 or 28, wherein the system further comprises a diagnostic node, and the diagnostic node is configured to send a diagnostic instruction for a to-be-diagnosed node.

30. A diagnostic apparatus, comprising:
a memory, configured to store a computer program; and
a processor, configured to execute the computer program stored in the memory, to enable the apparatus to perform the method according to any one of claims 1 to 7, or perform the method according to any one of claims 8 to 10, or perform the method according to any one of claims 11 to 13.

31. An intelligent device, wherein the intelligent device comprises the apparatus according to any one of claims 14 to 20 and the apparatus according to any one of claims 21 to 23; or the intelligent device further comprises the apparatus according to any one of claims 24 to 26; or
the intelligent device comprises the system according to claim 27 or 28.

32. A computer-readable storage medium, wherein the computer-readable storage medium stores instructions, and when the instructions are executed by a processor, the processor is enabled to implement the method according to any one of claims 1 to 7, or perform the method according to any one of claims 8 to 10, or perform the method according to any one of claims 11 to 13.
